# EUROPÄISCHE PATENTSCHRIFT

(11) **EP 1 330 384 B1**
(45) Veröffentlichungstag und Bekanntmachung des Hinweises auf die Patenterteilung: **29.12.2004**
(21) Anmeldenummer: 01978112.9
(22) Anmeldetag: 11.09.2001
(51) Int. Cl.: B62D 3/02, B62D 5/04, F16H 57/12

(54) **SPIELFREIES LENKGETRIEBE**
ZERO BACKLASH STEERING GEAR
MECANISME DE DIRECTION EXEMPT DE JEU

(30) Priorität: 17.10.2000 DE 1051306
(43) Veröffentlichungstag der Anmeldung: 30.07.2003
(73) Patentinhaber: ROBERT BOSCH GMBH, 70442 Stuttgart (DE)
(72) Erfinder: BOCK, Michael, 81673 München (DE); NAGEL, Willi, 71686 Remseck/Hochdorf (DE); KNECHT, Rolf, 71254 Ditzingen (DE)
(86) Internationale Anmeldenummer: PCT/DE2001/003476
(87) Internationale Veröffentlichungsnummer: WO 2002/032741

(56) Entgegenhaltungen:
- WO-A-99/11502
- WO-A-99/65758
- DE-A- 4 334 491
- FR-A- 2 375 772
- PATENT ABSTRACTS OF JAPAN vol. 017, no. 306 (M-1428), 11. Juni 1993 (1993-06-11) & JP 05 026330 A (MATSUSHITA ELECTRIC IND CO LTD), 2. Februar 1993 (1993-02-02)

## Beschreibung

### Stand der Technik

Die Erfindung betrifft ein Getriebe für eine Fahrzeuglenkung mit einem auf einer Welle drehfest angeordneten Ritzel und mit einem mit dem Ritzel kämmenden Zahnrad, wobei Ritzel und Zahnrad in radialer Richtung vorgespannt sind.

Konventionelle Fahrzeuglenkungen, Fahrzeuglenkungen mit Überlagerungsgetriebe und Steer-by-Wire-Lenkanlagen erfordern ein oder mehrere Lenkgetriebe mit denen die Drehbewegung des Lenkrads in eine Drehbewegung der gelenkten Räder umgesetzt wird.

Bei konventionellen elektrischen Servolenkungen muss zusätzlich ein von einem Elektromotor aufgebrachtes Drehmoment in die Lenkung eingekoppelt werden. Bei einer Steer-by-Wire-Lenkanlage besteht keine mechanische oder hydraulische Verbindung zwischen Lenkrad und gelenkten Rädern. Ein Lenksteller regelt die Stellung der gelenkten Räder in Abhängigkeit des Fahrerlenkwunsches und anderer Größen wie z. B. Gierrate oder Fahrgeschwindigkeit. Die Lenkbewegung der gelenkten Räder ist frei programmierbar und die gesamte Lenkarbeit wird durch den elektrischen oder hydraulischen Lenksteller aufgebracht.

Bei Fahrzeuglenkungen mit Überlagerungsgetriebe wird eine konventionelle Lenkung mit einem Überlagerungsgetriebe kombiniert, um Lenkeingriffe unabhängig vom Fahrerlenkwunsch vornehmen zu können. Damit werden die Eigenschaften einer Steer-by-Wire-Lenkanlage weitestgehend erreicht.

Bei diesen Getrieben ist Spiel unerwünscht, da es das Lenkgefühl verschlechtert, die Präzision von Lenkeingriffen verringert und sich außerdem beim Wechsel der Drehrichtung durch "Knackgeräusche" unangenehm bemerkbar macht.

Als der Erfindung am nächsten kommender Stand der Technik wird der in der WO 99/65758 A beschriebene Gegenstand angesehen, der die Merkmale des Oberbegriffs des Anspruchs 1 aufweist, mit der Ausnahme, daß anstatt eines Ritzels eine Schnecke auf der Welle angeordnet ist. Dabei handelt es sich um eine Motor-Getriebe-Einheit einer Fahrzeuglenkung mit einem Elektromotor 1 und einem Rotor 3, der mit einem Antriebsschaft 5 einer Schnecke 13 gekoppelt ist. Dieser Antriebsschaft 5 ist durch ein Festlager 10 und ein Loslager 9 im Getriebegehäuse 4 gelagert. Ferner ist der Antriebsschaft 5 mit dem Rotor 3 drehfest gekoppelt, der einerseits im Elektromotor-Gehäuse, abgewandt vom Festlager 10, gelagert ist. Als drehende Welle sind bei diesem Gegenstand somit zwei Bauelemente, nämlich der Rotor 3 und der Antriebsschaft 5 vorgesehen, die in insgesamt 3 Lagerstellen gelagert sind. Um eine gewünschte Spielfreiheit des Getriebes zu erreichen wird der Antriebsschaft 5 mit Hilfe des Festlagers 10 und des Loslagers 9 2-fach im Getriebegehäuse 4 gelagert.

Ausgehend von diesem Stand der Technik besteht die der Erfindung zugrunde liegende Aufgabe darin, das bekannte Getriebe für eine Fahrzeuglenkung hinsichtlich eines spielfreien Eingriffs zwischen Zahnrad und Ritzel weiter zu verbessern. Insbesondere soll die Zahl erforderlicher Bauteile reduziert, das Bauvolumen und Gewicht vermindert und die Bauweise vereinfacht werden. Diese Aufgabe löst ein Gegenstand mit den Merkmalen des Anspruchs 1.

Zur Vermeidung von Spiel in Lenkgetrieben ist es aus der DE-OS 198 22 478 A1 ferner bekannt, das Ritzel eines Schneckengetriebes axial verschiebbar zu lagern und in axialer Richtung federnd vorzuspannen. Dadurch wird eventuell vorhandenes Spiel im Lenkgetriebe nicht verringert, sondern es wird lediglich die Entstehung der o.g. "Knackgeräusche" teilweise verhindert, da das Ritzel nach einem Wechsel der Drehrichtung beim Aufprall auf das Schneckenrad in axialer Richtung ausweichen kann und somit der Aufprall gemildert wird. Nachteilig an diesem Lenkgetriebe ist, dass die Präzision der Lenkbewegung leidet und ein Längenausgleich zwischen der Ritzelwelle und dem die Ritzelwelle antreibenden Elektromotor erforderlich ist.

Es ist weiterhin aus der WO 99/11502 bekannt die Ritzelwelle eines Schneckengetriebes einer elektrischen Servoeinheit in einer Exzenterhülse zu lagern, so dass bei der Montage das Spiel des Schneckengetriebes eingestellt werden kann. Nachteilig an dieser Lösung ist, dass durch Verschleiss der Getrieberäder und/oder deren Lagerung sich das Spiel im Lauf der Zeit vergrößert und somit die Knackgeräusche zunehmen.

Aus der JP OS 10 281 235 A ist es bekannt, das Ritzel eines elektrisch angetriebenen Schneckengetriebes in einer durch einen O-Ring aus Gummi, welcher zwischen Ritzellager und Gehäuse angeordnet ist, gebildeten elastischen Lagerung vorgespannt zu montieren. Bei diesen Getriebe tritt kein Spiel auf und der Verschleiss des Getriebes wird selbsttätig ausgeglichen. Nachteilig an dieser Ausführung ist jedoch, dass ein O-Ring im Laufe der Zeit altert und somit die Vorspannung zurückgeht. Außerdem kann das Ritzel nicht nur in radialer sondern auch in tangentialer Richtung ausgelenkt werden, was die Lenkpräzision verringert.

Aus der noch nicht veröffentlichten Patentanmeldung mit dem Aktenzeichen 199 44 133.2 (AT 15.09.1999) der ZF Lenksysteme GmbH ist eine elektrische Servoeinheit bekannt der die Welle auf der das Ritzel eines Schneckengetriebes befestigt ist an drei Punkten gelagert ist. Eines der drei Lager ist in radialer Richtung verschiebbar. Durch das Aufbringen einer Federkraft in radialer Richtung wird die Welle elastisch verformt und somit ein spielfreier Eingriff des Ritzels im Schneckenrad gewährleistet. Allerdings muss Welle zusätzlich zu den aus dem Betrieb des Lenkgetriebes resultierenden Torsionsbeanspruchungen noch eine umlaufende Biegebeanspruchung aufnehmen.

Ein Getriebe gemäß der Erfindung weist die im Anspruch 1 definierten Merkmale auf.

Durch die Schwenkbewegung der Welle in radialer Richtung kann ein spielfreier Eingriff zwischen Ritzel und Zahnrad hergestellt werden, der auch beim Auftreten von Verschleiss der Zahnradlagerungen oder der Zahnräder ohne weiteres ausgeglichen werden kann. Zusätzliche Belastungen der Getriebebauteile treten nicht auf. Des Weiteren ist es möglich die Anpresskraft zwischen Ritzel und Zahnrad einfach und genau festzulegen, so dass die Reibung des Getriebes nicht größer als unbedingt notwendig ist und somit die Rückstellung der Fahrzeuglenkung in die Mittellage nicht nennenswert behindert wird. Außerdem kann sich das Ritzel in axialer Richtung nicht verschieben, was die Lenkpräzision erhöht.

Bei einer Variante der Erfindung ist vorgesehen, dass das Gehäuse ein Langloch zur Aufnahme des Loslagers aufweist, und dass die Längsachse des Langlochs in radialer Richtung verläuft. Bei dieser Variante ist die Schwenkbewegung der Welle durch das Langloch vorgegeben. Ein Ausweichen der Welle in tangentialer Richtung ist nicht möglich. Weiterhin ist ein Langloch fertigungstechnisch einfach herzustellen.

In weiterer Ergänzung der Erfindung stützt sich das Loslager über einen Stützring gegen das Gehäuse ab, so dass das Loslager nicht mit oder linienförmigen Radiallasten beaufschlagt wird und die Führung des Loslagers im Gehäuse verbessert wird.

In weiterer Ergänzung der Erfindung ist das Federelement eine Spiralfeder oder eine Tellerfeder. Die Vorspannkraft hängt im Wesentlichen von der Federrate des oder der Federelemente ab und nur in geringem Umfang von der Fertigungstoleranz des Stützrings und des Gehäuses ab.

Bei einer anderen Ausgestaltung der Erfindung ist zwischen Loslager und Gehäuse oder zwischen Stützring und Gehäuse eine Verdrehsicherung angebracht, so dass das Loslager sich nicht im Gehäuse drehen kann, was zu Funktionsbeeinträchtigungen führen könnte.

Bei einer weiteren Ergänzung der Erfindung ist das Ritzel auf der Rotorwelle eines Elektromotors drehfest angeordnet, so dass die Zahl der Bauteile reduziert wird und eine besonders kompakte Bauweise des erfindungsgemäßen Getriebes möglich wird.

Das erfindungsgemäße Getriebe kann ein Schneckengetriebe, ein Stirnradgetriebe mit Außen- oder Innenverzahnung, ein Stirnradgetriebe mit Zahnstange, ein Kegelradgetriebe, ein Planetengetriebe oder ein Schraubenradgetriebe sein, so dass die erfindungsgemäßen Vorteile bei allen Getriebearten zum Tragen kommen. Des Weiteren können Ritzel und Zahnrad oder Zahnstange gradverzahnt oder schrägverzahnt sein.

Schließlich kann das erfindungsgemäße Getriebe in einer Servoeinheit einer elektrischen Servolenkung, in einem Zahnstangenlenkgetriebe, in einem Lenksteller mit Überlagerungsgetriebe oder als elektromotrischer Lenksteller einer Steer-by-Wire-Lenkanlage eingesetzt werden.

Weitere Vorteile und vorteilhafte Ausgestaltungen der Erfindung sind der nachfolgenden Zeichnung und deren Beschreibung entnehmbar.

### Zeichnung

Ausführungsbeispiele der Erfindung sind in der Zeichnung dargestellt und nachfolgend beschrieben. Es zeigen:
- Figur 1: ein erstes Ausführungsbeispiel eines erfindungsgemäßen Stirnradgetriebes mit Außenverzahnung;
- Figur 2: ein zweites Ausführungsbeispiel eines erfindungsgemäßen Schneckengetriebes;
- Figur 3: ein Detail einer erfindungsgemäßen Wellenlagerung und
- Figur 4: ein Schnitt entlang der Linie A-A

### Beschreibung der Erfindung

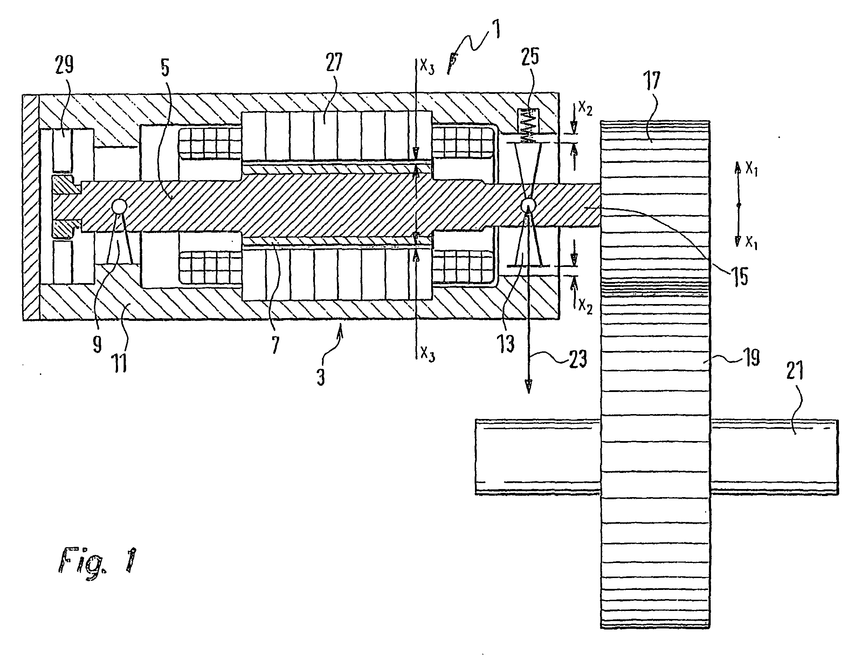

In Figur 1 ist ein erstes Ausführungsbeispiel eines erfindungsgemäßen Getriebes 1 mit einer Stirnradverzahnung dargestellt. Das Getriebe 1 besteht aus einem Elektromotor 3 mit einer Welle 5, die einen Rotor 7 trägt. Die Welle 5 ist an ihrem einen Ende mit einem nur schematisch dargestellten Festlager 9 in einem Gehäuse 11 des Elektromotors 3 gelagert. Am entgegengesetzten Ende des Elektromotors 3 ist ein Loslager 13 vorhanden. Auf einem Wellenstumpf 15 der Welle 5 ist ein Ritzel 17 drehfest befestigt. Das Ritzel 17 ist somit fliegend auf der Welle 5 gelagert und kämmt mit einem Zahnrad 19, welches auf einer Abtriebswelle 21 befestigt ist. Die Lagerung der Abtriebswelle 21 ist in Figur 1 nicht dargestellt.

Um Spiel in der Verzahnung zwischen Ritzel 17 und Zahnrad 19 zu verhindern, kann die Welle 5 um das Festlager 9 in Richtung der Pfeile X1 verschwenkt werden. Die Schwenkbewegung der Welle 5 wird dadurch ermöglicht, dass das Loslager 13 in radialer Richtung, welche durch einen Pfeil 23 dargestellt ist, verschiebbar im Gehäuse 11 befestigt ist. Ein als Spiralfeder ausgebildetes Federelement 25 presst das Ritzel 17 auf das Zahnrad 19, so dass eine spielfreie Übertragung der Drehbewegung des Elektromotors 3 auf die Abtriebswelle erfolgt. Federrate und Vorspannung des Federelements 25 sind so zu bemessen, dass, unabhängig von der Drehrichtung und dem Drehmoment des Elektromotors 3, die zwischen den Zahnflanken des Ritzels 17 und des Zahnrads 19 auftretenden Kräfte die Welle 5 nicht entgegen der Federkraft des Federelements 25 verschwenken können. Andererseits ist darauf zu achten, dass die Federkraft des Federelements 25 nicht größer als nötig ist, um zu verhindern, dass das erfindungsgemäße Getriebe schwergängig wird und der Verschleiss unnötig groß ist.

Um die Funktion des Elektromotors 3 sicherzustellen, ist es notwendig, dass der Verschwenkweg X2 des Loslagers 13 so bemessen ist, dass der Rotor 7 nicht an einem Stator 27 des Elektromotors schleifen kann. Außerdem ist darauf zu achten, dass eventuell vorhandene Bürsten 29 des Elektromotors 23 oder nicht dargestellte Drehwinkelsensoren durch das Verschwenken der Welle 5 in ihrer Funktion nicht beeinträchtigt werden. Dies bedeutet, dass der Spalt X3 zwischen Rotor 7 und Stator 27 so bemessen sein muss, dass wenn der Verschwenkweg X2 des Loslagers 13 aufgezehrt ist eine Berührung zwischen Rotor 7 und Stator 27 nicht. stattfindet.

Die Bürste 29 oder die nicht dargestellten Drehwinkelsensoren werden deshalb bevorzugt in der Nähe des Festlagers 9 angeordnet. Das Gehäuse 11 des Elektromotors 3 weist im Bereich des Loslagers 13 ein Langloch auf, welches um zweimal den Betrag X2 länger ist als der Durchmesser des Loslagers 13.

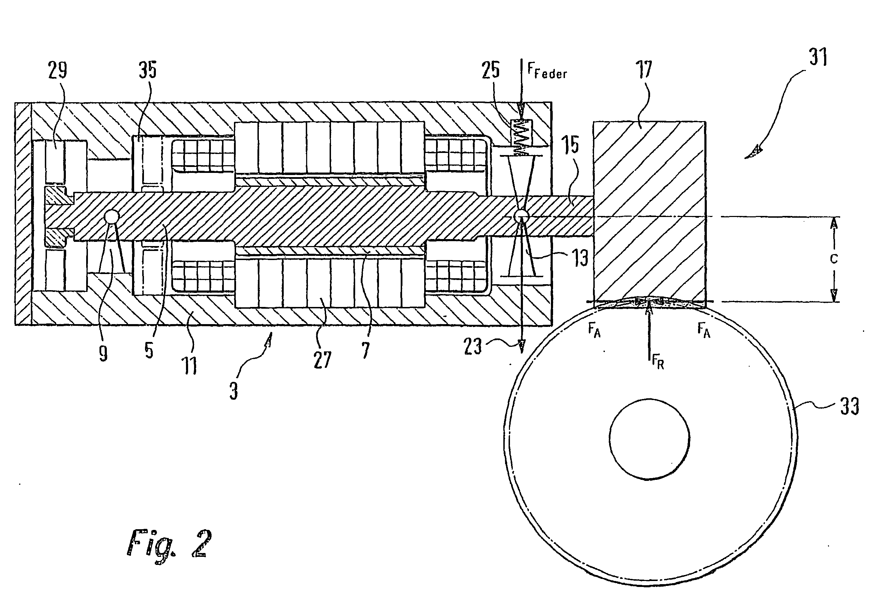

Figur 2 zeigt ein zweites Ausführungsbeispiel der Erfindung in Form eines Schneckengetriebes 31. Gleiche Bauteile werden mit gleichen Bezugszeichen versehen und es gilt das bezüglich eines Ausführungsbeispiels gesagte entsprechen. Aus Gründen der Übersichtlichkeit sind in der Figur 2 die Pfeile X1, der Verschwenkweg X2 und der Spalt X3 zwischen Rotor 7 und Stator 27 nicht noch einmal eingezeichnet. Es gilt jedoch das bezüglich des ersten Ausführungsbeispiel gesagte auch für das zweite Ausführungsbeispiel. In Figur 2 ist ein weiterer möglicher Einbauort 35 für Bürsten 29 oder nicht dargestellte Drehwinkelsensoren.

Wenn das Ritzel 17 ein Drehmoment auf das Schneckenrad 33 überträgt entsteht eine Radialkraft F_{R}. Die Radialkraft F_{R} wirkt der Federkraft F_{Feder} des Federelements 25 entgegen. Darüberhinaus entsteht durch die Übertragung des Drehmoments vom Ritzel 17 auf das Schneckenrad 33 auch noch eine Axialkraft F_{A}. Abhängig von der Drehrichtung ändert die Axialkraft F_{A} ihre Richtung. Das Federelement 25 muss so dimensioniert sein, dass das Anpressmoment F_{Feder} x a des Federelements 25 größer als das Moment (F_{R} x b - F_{A} x c) ist.

Bei Verzahnungen die axialkraftfrei sind, wie bspw. Pfeilverzahnungen, tritt keine Axialkraft F_{A} auf, so dass die Federkraft F_{Feder} des Federelements 25 entsprechend geringer gewählt werden kann. Dadurch entsteht weniger Reibung und die Anpresskraft ist unabhängig von der Drehrichtung des Elektromotors 3.

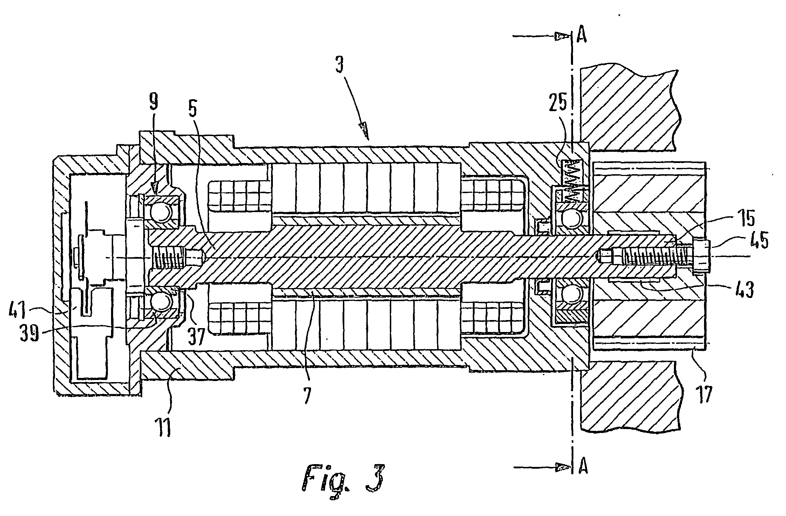

In Figur 3 ist eine konstruktive Ausgestaltung des ersten Ausführungsbeispiels etwas detaillierter dargestellt. Das Festlager 9 und das Loslager 13 sind als Rillenkugellager ausgeführt. Ein Innenring 37 des festlagers 9 ist über einen Presssitz mit der Welle 5 verbunden. Ein Außenring 39 des Festlagers 9 ist über einen Presssitz im Gehäuse 11 bzw. den zum Gehäuse 11 gehörigen Lagerdeckel eingepresst. An dem dem Ritzel 17 entgegengesetzten Ende der Welle 5 ist ein Drehwinkelsensor 41 angeordnet. Das Ritzel 17 ist über die Passfedern 43 und eine Schraube 45 drehfest und axial fest mit dem Wellenstumpf 15 verbunden.

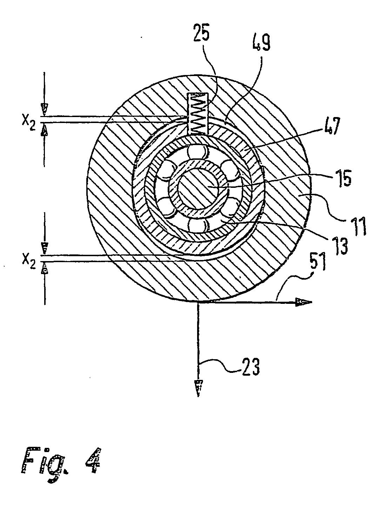

Figur 4 zeigt eine Schnittdarstellung des Loslagers 13 entlang der Schnittlinie A-A. Der Wellenstumpf 15 ist mit einem Rillenkugellager in einem Stützring 47 gelagert. Der Stützring 47 wiederum ist in einem Langloch 49 des Gehäuses 11 aufgenommen. Das Langloch 49 ist so bemessen, dass in radialer, d.h. in Richtung des Pfeils 23 der Stützring 47 um zweimal X2 verschoben werden kann. D.h. durch die Länge des Langlochs 49 in radialer Richtung ist der Verschwenkweg X2 festgelegt. Das Federelement 25 wirkt entweder direkt auf den Außenring des Loslagers 13 oder mittelbar über den Stützring 47 auf die Welle 5. In tangentialer Richtung - hier durch einen Pfeil 51 angedeutet ist das Langloch 49 so bemessen, dass der Stützring 47 spielfrei in das Langloch passt. Das Federelement 25 dient gleichzeitig als Verdrehsicherung, um zu verhindern, dass sich der Stützring im Langloch 49 dreht. Unter Schutz gestellt werden sollen auch andere Ausgestaltungen, die in tangentialer Richtung spielfrei sind und in radialer Richtung eine Verschiebung des Stützrings 47 um zweimal den Betrag X2 erlauben.

Die Erfindung und ihre Anwendbarkeit ist nicht auf Schneckengetriebe und geradverzahnte Stirnradgetriebe mit Außenverzahnung gemäß der Ausführungsbeispiele beschränkt sondern kann auch bei Stirnradgetrieben mit Innenverzahnung, Kegelradgetrieben, Planetengetrieben oder Schraubenradgetrieben eingesetzt werden. Die Erfindung ist auch auf Zahnstangengetriebe anwendbar.

## Patentansprüche

1. Getriebe für eine Fahrzeuglenkung, mit einem Ritzel (17), das auf einer Welle (5) drehfest angeordnet ist, sowie mit einem Zahnrad (19), das mit dem Ritzel (17) kämmt, wobei Ritzel (17) und Zahnrad (19) in radialer Richtung vorgespannt sind, und die Welle (5) in radialer Richtung (23) verschwenkbar gelagert und mittels eines Festlagers (9) und eines Loslagers (13) gelagert ist, das in radialer Richtung (23) in einem Gehäuse (11) verschiebbar ist, so dass die Welle (5) um das Festlager (9) schwenkbar ist, und wobei zwischen dem Gehäuse (11) und dem Loslager (13) oder einem Stützring (47) für das Loslager (13) mindestens ein Federelement (25) vorgesehen ist, **dadurch gekennzeichnet, dass** die Welle (5) zugleich die Rotorwelle eines Elektromotors ist und das Ritzel (17) fliegend auf einem Wellenstumpf (15) der Welle 5 gelagert ist.

2. Getriebe nach Anspruch 1, **dadurch gekennzeichnet, dass** sich das Festlager (9), um welches die Welle (5) schwenkbar ist, an derjenigen Seite des Elektromotors befindet, die dem Wellenstumpf (15) abgewandt ist, während sich das Loslager (13) an der anderen Seite des Elektromotors befindet.

3. Getriebe nach einem der Ansprüche 1 oder 2, **dadurch gekennzeichnet, dass** das Gehäuse (11) ein Langloch (49) zur Aufnahme des Loslagers (13) aufweist, und dass die Längsachse des Langlochs (49) in radialer Richtung (23) verläuft.

4. Getriebe nach einem der Ansprüche 1 bis 3, **dadurch gekennzeichnet, dass** das Federelement (25) eine Spiralfeder oder eine Tellerfeder ist.

5. Getriebe nach einem der vorhergehenden Ansprüche, **dadurch gekennzeichnet, dass** zwischen Loslager (13) und Gehäuse (11) oder zwischen Stützring (47) und Gehäuse (11) eine Verdrehsicherung angebracht ist.

6. Getriebe nach einem der vorhergehenden Ansprüche, **dadurch gekennzeichnet, dass** die Welle (5) mit Gleitlagern und/oder Wälzlagern, bevorzugt Rillen- oder Pendelkugellagern, in dem Gehäuse (11) gelagert ist.

7. Getriebe nach einem der vorhergehenden Ansprüche, **dadurch gekennzeichnet, dass** das Getriebe ein Schneckengetriebe, Stimradgetriebe mit Außen- oder Innenverzahnung, Stirnradgetriebe mit Zahnstange, kegelradgetriebe, Planetengetriebe oder Schraubenradgetriebe ist.

8. Verwendung eines Getriebes nach einem der Ansprüche 1 bis 7, **dadurch gekennzeichnet, dass** das Getriebe in einer Servoeinheit einer elektrischen Servolenkung, in einem Zahnstangenlenkgetriebe, in einem Lenksteller, in einem Überlagerungsgetriebe und/oder als Lenksteller einer Steer-by-Wire-Lenkanlage eingesetzt wird.

## Claims

1. Gear for a vehicle steering, with a pinion (17) which is arranged fixedly in terms of rotation on a shaft (5), and with a gearwheel (19) which meshes with the pinion (17), the pinion (17) and gearwheel (19) being prestressed in the radial direction, and the shaft (5) being mounted pivotably in the radial direction (23) and being mounted by means of a fixed bearing (9) and a loose bearing (13) which is displaceable in the radial direction (23) in a housing (11), so that the shaft (5) can be pivoted about the fixed bearing (9), and at least one spring element (25) being provided between the housing (11) and the loose bearing (13) or a supporting ring (47) for the loose bearing (13), **characterized in that** the shaft (5) is at the same time the rotor shaft of an electric motor, and the pinion (17) is mounted, cantilevered, on a shaft stub (15) of the shaft (5).

2. Gear according to Claim 1, **characterized in that** the fixed bearing (9) about which the shaft (5) can be pivoted is located on that side of the electric motor which faces away from the shaft stub (15), whilst the loose bearing (13) is located on the other side of the electric motor.

3. Gear according to either one of Claims 1 and 2, **characterized in that** the housing (11) has a long hole (49) for receiving the loose bearing (13), and **in that** the longitudinal axis of the long hole (49) runs in the radial direction (23).

4. Gear according to one of Claims 1 to 3, **characterized in that** the spring element (25) is a helical spring or a cup spring.

5. Gear according to one of the preceding claims, **characterized in that** an anti-twist device is mounted between the loose bearing (13) and the housing (11) or between the supporting ring (47) and the housing (11).

6. Gear according to one of the preceding claims, **characterized in that** the shaft (5) is mounted in the housing (11) by means of plain bearings and/or rolling bearings, preferably grooved or pendulum-type ball bearings.

7. Gear according to one of the preceding claims, **characterized in that** the gear is a worm gear, spur gear with external or internal toothing, spur gear with rack, bevel gear, epicyclic gear or helical gear.

8. Use of a gear according to one of Claims 1 to 7, **characterized in that** the gear is used in a booster unit of an electrical power steering, in a rack-and-pinion steering gear, in a steering adjuster, in a variable-ratio gear and/or as a steering adjuster of a steer-by-wire steering system.

## Revendications

1. Mécanisme de direction d'un véhicule, comprenant un pignon (17) monté en rotation sur un arbre (5), ainsi qu'une roue dentée (19) s'engrenant avec le pignon (17), le pignon (17) et la roue dentée (19) étant précontraints en direction radiale, et dont l'arbre (5) pouvant pivoter en direction radiale (23) est monté au moyen d'un palier fixe (9) et d'un palier libre (13) mobile dans un boîtier (11) en direction radiale (23) de telle sorte que l'arbre (5) peut pivoter autour du palier fixe (9), et avec au moins un élément de ressort (25) prévu entre le boîtier (11) et le palier libre (13) ou un anneau de support (47) pour le palier libre ( 13),
**caractérisé en ce que**
l'arbre (5) est en même temps l'arbre rotor d'un moteur électrique et le pignon (17) est monté flottant sur un bout d'arbre (15) de l'arbre (5).

2. Mécanisme de direction selon la revendication 1,
**caractérisé en ce que**
le palier fixe (9), autour duquel l'arbre (5) peut pivoter, se trouve du côté du moteur électrique opposé au bout d'arbre (15) tandis que le palier libre (13) se trouve de l'autre côté du moteur électrique.

3. Mécanisme de direction selon l'une des revendications 1 ou 2,
**caractérisé en ce que**
le boîtier (11) présente un trou oblong (49) pour recevoir le palier libre (13) et l'axe longitudinal du trou oblong (49) s'étend en direction radiale (23).

4. Mécanisme de direction selon l'une des revendications 1 à 3,
**caractérisé en ce que**
l'élément de ressort (25) est un ressort à spirale ou une rondelle de Belleville.

5. Mécanisme de direction selon l'une des revendications précédentes,
**caractérisé en ce que**
une protection anti-torsion est disposée entre le palier libre (13) et le boîtier (11) ou entre l'anneau de support (47) et le boîtier (11).

6. Mécanisme de direction selon l'une des revendications précédentes,
**caractérisé en ce que**
l'arbre (5) est monté dans le boîtier (11) avec des paliers lisses et/ou des paliers à roulement, de préférence des roulements à billes rigides ou à rotules.

7. Mécanisme de direction selon l'une des revendications précédentes,
**caractérisé en ce que**
la mécanisme est un engrenage à vis sans fin, un engrenage à pignons droits avec une denture externe ou interne, un engrenage cylindrique crémaillère, un engrenage conique, un engrenage planétaire ou un engrenage hélicoïdal.

8. Utilisation d'un mécanisme de direction selon l'une des revendications 1 à 7,
**caractérisée en ce que**
la mécanisme est utilisée dans une unité de direction assistée électrique, dans un boîtier de direction à crémaillères, dans un régulateur de direction, dans un engrenage de superposition et/ou sous forme de régulateur de direction d'une installation de direction à commande par câble (Steer-by-Wire).
